(19) Europäisches Patentamt
European Patent Office
Office européen des brevets

(11) **EP 4 230 041 A1**

(12) **EUROPEAN PATENT APPLICATION**
published in accordance with Art. 153(4) EPC

(43) Date of publication:
**23.08.2023 Bulletin 2023/34**

(21) Application number: **22773929.9**

(22) Date of filing: **10.02.2022**

(51) International Patent Classification (IPC):
*A01N 57/20* (2006.01)    *A01N 43/80* (2006.01)
*A01N 25/04* (2006.01)    *A01P 13/00* (2006.01)

(86) International application number:
**PCT/CN2022/075774**

(87) International publication number:
**WO 2022/199267 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021 CN 202110304261**

(71) Applicant: **Nantong Jiangshan Agrochemical &
Chemicals Co., Ltd
Nantongshi, Jiangsu 226000 (CN)**

(72) Inventors:
• **DU, Hui
nantongshi, Jiangsu 226000 (CN)**

• **REN, Xinfeng
nantongshi, Jiangsu 226000 (CN)**
• **ZHU, Yanmei
nantongshi, Jiangsu 226000 (CN)**
• **FAN, Meiyun
nantongshi, Jiangsu 226000 (CN)**
• **DONG, Lei
nantongshi, Jiangsu 226000 (CN)**
• **XU, Yingrong
nantongshi, Jiangsu 226000 (CN)**

(74) Representative: **Jannig & Repkow
Patentanwälte PartG mbB
Klausenberg 20
86199 Augsburg (DE)**

(54) **HERBICIDAL COMPOSITION, PREPARATION, AND APPLICATION THEREOF**

(57) The invention relates to the technical field of pesticides, in particular to a herbicidal composition, a preparation and an application thereof. A herbicidal composition including benzylazole and glyphosate; The weight ratio of the described benzylazole to glyphosate is 1: (10-100). The present invention also provides a dispersible oil suspension including the herbicidal composition, which optimizes the type and content of emulsifier, dispersant, synergist, viscosity regulator and dispersion medium by screening and optimizing the type and content of the dispersible oil suspension. The prepared dispersible oil suspension has stable quality and good performance, is more beneficial to the exertion of drug effect and also has excellent low temperature fluidity, dispersion stability, thermal storage stability and so on. Moreover, the raw material is easy to obtain, the preparation process is simple, and it is easy for industrial production, so it is suitable for the control of weeds in non-cultivated land.

EP 4 230 041 A1

## Description

Cross-Reference to Related Applications

The present application is a continuation of International Application No. PCT/CN2022/075774, with an international filing date of February 10, 2022, which is based upon and claims priority to Chinese Patent Application No. 202110304261.2, filed on March 22, 2021, the entire contents of all of which are incorporated herein by reference.

## Technical Field

The invention relates to the technical field of pesticides, in particular to a herbicidal composition, a preparation and the application thereof.

## Background

Benzylazole, chemical name: 3-(2-chloro-4-fluoro-5-(3-methyl-2,6-dioxo-4-trifluoromethyl-3,6-dihydropyrimidine-1 (2H)-group) phenyl)-5-methyl-4,5 -dihydroisoxazole -5-carboxylate ethyl ester, which is characterized as the combination of uracil and isoxazole structure. Compared with benzenesulfonamide, it has better herbicidal activity and can effectively control annual and perennial weeds in garden and non-cultivated land, but the cost is high. At present, herbicide varieties with single active ingredient have varying degrees of defects in the process of agricultural weeding, e.g. if it is continuously used, it is easy to produce drug resistance. The weeding spectrum is not wide enough, so it can only control monocotyledon weeds or dicotyledonous weeds, or can only control emergence weeds or non-emergence weeds, not both. Through the combination of two or more active components, it can improve the control effect, reduce the use of effective components, save the cost of control, delay the emergence of weed drug resistance, prolong the service life of the agent, and reduce the pollution to the environment.

Dispersible oil suspension is a highly dispersed and stable non-aqueous suspension system made of raw drugs and auxiliaries (e.g. emulsifiers, dispersants and viscosity regulators, etc.) with oil phase as carrier, in which at least one component is insoluble in non-aqueous medium and used after dilution with water. Compared with other dosage forms, dispersible oil suspension has the characteristics of safety, environmental protection and good efficacy, which is characterized by no dust pollution in the production process and no use of flammable and explosive organic solvents, so it is safer for producers and users. Storage and transportation are also convenient and safe for the environment, so it has been widely used in the world. In view of the physical and chemical properties of some crude drugs or the lack of good synergy between crude drugs and auxiliaries, e.g. some crude drugs with poor lipophilicity, it is difficult for them to enter the plant through the crop epidermis and exert their internal absorption and their efficacy due to worse permeability and adhesion, so dispersible oil suspensions are made for crude drugs with poor lipophilicity, especially herbicides insoluble in the oil phase, which can play a synergistic effect. Due to the big differences in the physical and chemical properties of different pesticide raw drugs, there are big differences in the properties of various auxiliaries, the interaction of auxiliaries and their influence on the original drugs. At present, dispersible oil suspensions have some problems such as poor low temperature fluidity, poor dispersion stability, poor thermal storage stability (oil precipitation, decomposition, discoloration, viscosity, crystallization) after thermal storage, which make it easy to block nozzles or filters and directly affects the quality and application effect of dispersible oil suspending agent.

For the above technical problems, present invention provides a herbicidal composition containing benzylazole and a dispersible oil suspension agent made of it. Through the selection of auxiliaries, the stability problem of the current dispersible oil suspension agent is solved.

## Summary

In order to solve the above technical problems, present invention provides a herbicidal composition comprising benzylazole and glyphosate in the first aspect; The weight ratio of the described benzylazole to glyphosate is 1: (10-100).

The invention provides a herbicidal composition preparation in the second aspect, which is composed of the herbicidal composition and agro-pharmaceutical acceptable excipients.

As a preferred technical proposal of the invention, the herbicidal composition preparation is selected from one of soluble agents, microemulsions, dispersible oil suspensions, wettable powders and water dispersible granules.

As a preferred technical proposal of the invention, the weight percentage of the herbicidal composition to the herbicidal composition preparation is 5%-90% by weight.

As a preferred technical proposal of the invention, the herbicidal composition preparation is a dispersible oil suspension agent; The agro-pharmaceutical acceptable excipients include at least one of an emulsifier, a wetting agent, a dispersant, a stabilizer, a defoamer, a viscosity regulator and a base oil.

As a preferred technical scheme of the present invention, the described emulsifier is selected from at least one of castor oil polyoxyethylene ether, calcium dodecylbenzene sulfonate, fatty alcohol polyoxyethylene ether, fatty acid polyoxyethylene ester, alkylphenol formaldehyde resin polyoxyethylene ether, sorbitan monostearate, dehydrated sorbitol monostearate polyoxyethylene ether, phenylethylphenol polyoxyethylene ether, phenethyl phenol polyoxyethylene polypropylene ether, alkoxy polyoxyethylene ether sulfonate, fatty alcohol sulfate, alkyl phosphate salt, fatty alcohol polyoxyethylene ether sulfate, EO-PO block copolymer and phenylethylphenol polyoxyethylene ether sulfonate.

As a preferred technical proposal of the invention, the emulsifier is a combination of castor oil polyoxyethylene ether and phenylethylphenol polyoxyethylene ether sulfonate, and the weight ratio is 1: (0.1-0.5).

As a preferred technical proposal of present invention, the dispersant is selected from at least one of polycarboxylates, lignosulfonates, EO-PO block copolymers, phosphates and their salts, sulfonates, alkyl naphthalene sulfonates, alkylphenol polyoxyethylene ethers and fatty alcohol polyoxyethylene ethers.

As a preferred technical proposal of present invention, the described viscosity regulator is a combination of organic bentonite and magnesium aluminum silicate, and the weight ratio is 1: (0.5-2).

The present invention provides the application of the herbicidal composition for the control of weeds in non-cultivated land in the third aspect.

Beneficial Effect

The present invention provides a herbicidal composition and a dispersible oil suspension containing the herbicidal composition, which has the following beneficial effects:

Through the compounding of benzylazole and glyphosate, the action mechanism is unique, has no interactive resistance, generates a synergistic effect, expands the herbicide spectrum, improves the control effect, and makes up for the defect of poor control effect of single agent on main weeds; It improves the persistence of various components of the composition, delays the emergence of weed drug resistance, reduces the repeated use of pesticides, and reduces the amount and cost of use. It can be mainly used to control weeds in non-cultivated land, especially to control glyphosate-resistant weeds such as *conyzacanadensis(L.) cronq., eleusineindica(L.) gaertn.* and so on.

By screening and optimizing the type and content of emulsifier, dispersant, synergist, viscosity regulator and dispersion medium, the prepared dispersible oil suspension agent has stable quality and good performance, and is more conducive to the exertion of drug effect. At the same time, it has excellent low temperature fluidity, dispersion stability, thermal storage stability, etc., has raw materials easy to obtain, has simple preparation process, and is easy for industrial production.

**Detailed Description of The Embodiments**

The summary of present invention can be more easily understood by selecting the following detailed description of the preferred embodiment of the invention and the included embodiments. Unless otherwise limited, all technical and scientific terms used herein have the same meaning as those generally understood by ordinary technicians in the field to which the invention belongs. When there is a contradiction, the definition in this specification shall prevail.

The term "prepared by..." used in this application is synonymous with "inclusion". The terms "include", "contain", "have", "have" or any other variants thereof are intended to cover non-exclusive inclusions. For example, a composition, step, method, product or device containing the listed elements need not be limited to those elements, but may include other elements not explicitly listed or elements inherent in such a composition, step, method, product or device.

The conjunction "is made up of..." excludes any unspecified elements, steps, or components. If it is used in a claim, this phrase will make the claim closed so that it does not contain material other than those described, except for conventional impurities associated with it. When the phrase "is made up of..." appears in the clause of the subject of the claim rather than immediately after the subject, it is limited to the elements described in the clause; other elements are not excluded from the claims as a whole.

When an equivalent, concentration, or other value or parameter is expressed in a range, a preferred range, or a range defined by a series of upper and lower preferred values, this should be understood to specifically disclose all ranges formed by any pairing of any upper limit or preferred value of any range with any lower or preferred value of any range, whether or not the range is disclosed separately. For example, when the range "1 to 5" is disclosed, the range described should be interpreted as including the range "1 to 4", "1 to 3", "1 to 2", "1 to 2 and 4 to 5", "1 to 3 and 5", and so on. When a numerical range is described in this article, the range is intended to include its end value and all integers and fractions within the range unless otherwise stated.

The singular form includes plural discussion objects unless otherwise clearly indicated in the context. "Optional" or "either" means that a subsequent description of an event or event may or may not occur, and the description includes the circumstances in which the event occurs and the situation in which the event does not occur.

The approximate terms in the specification and claims are used to modify the quantity, which indicates that present invention is not limited to that specific quantity, but also includes amendments that are acceptable close to that quantity and will not lead to changes in the relevant basic functions. Accordingly, a value is modified with "approximately", "about", etc., which means that the present invention is not limited to the exact value. In some cases, the approximate term may correspond to the accuracy of the instrument that measures the value. In this statement of application and claim, the range limits may be combined and / or interchangeable if it is not otherwise stated that these ranges include all sub-areas contained therein.

In order to solve the above technical problems, present invention provides a herbicidal composition comprising benzylazole and glyphosate in the first aspect; The weight ratio of described benzylazole to glyphosate is 1: (10-100).

In a preferred embodiment, the weight ratio of benzylazole to glyphosate is 1: (20-60).

In a more preferred embodiment, the weight ratio of benzylazole to glyphosate is 1:40.

The inventors find that after the benzoxazol and glyphosate are recombined, due to uniqueness of the unique action mechanism of the two active ingredients and no interactive resistance, it produces the synergistic effect, expands the herbicide spectrum, improves the control effect, makes up for the defect of poor control effect of single agent on main weeds, improves the persistence of various components of the composition, delays the emergence of weed resistance, reduces the repeated use of pesticides, and reduces the amount of use and cost. It can be mainly used to control weeds in non-cultivated land, especially to control glyphosate-resistant weeds such as *conyzacanadensis(L.) cronq., eleusineindica(L.) gaertn.* so on.

Present invention provides a herbicidal composition preparation in the second aspect, which is composed of the herbicidal composition and agro-pharmaceutical acceptable excipients.

In a preferred embodiment, the described herbicidal composition preparation is selected from one of a soluble agent, a microemulsion, a dispersible oil suspension, a wettable powder, and a water dispersible granule.

In a preferred embodiment, the weight percentage of the herbicidal composition to the herbicidal composition preparation is 5-90%.

In a preferred embodiment, the described herbicidal composition preparation is a dispersible oil suspension agent. The described agro-pharmaceutical acceptable excipients include at least one of an emulsifier, a wetting agent, a dispersant, a stabilizer, a defoamer, a viscosity regulator and a base oil.

Dispersible oil suspension

In present invention, according to the weight percentage, the preparation raw materilas of the dispersible oil suspension of the described herbicide at least includes the following components: 5-50% herbicide composition, 5-20% emulsifier, 0-5% wetting agent, 1-5% dispersant, 0-5% defoamer, 2-10% viscosity regulator and 100% base oil supplement.

Emulsifying agent

Emulsifier is a kind of compound that can make the mixture of two or more immiscible components to form a stable emulsion. Its action principle is as follows: in the process of emulsification, the dispersed phase is dispersed in the continuous phase in the form of droplets (micron level), and the emulsifier reduces the interfacial tension of each component in the mixed system. A solid film is formed on the droplet surface or an electric double layer is formed on the droplet surface due to the charge given by the emulsifier to prevent the droplets from gathering with each other and maintain a uniform emulsion. From the view of the phase, the emulsion is still a heterogeneous system. The dispersed phase in the emulsion can be water phase or oil phase, most of which are oil phase; the continuous phase can be oil phase or water phase, and most of them are water phase. The emulsifier is a kind of surfactant with hydrophilic and lipophilic groups in the molecule. In order to express the hydrophilicity or lipophilicity of emulsifiers, the "hydrophilic-lipophilic balance value (HLB value)" is usually used. The lower the HLB value is, the stronger the lipophilicity is; On the contrary, the higher the HLB value is, the stronger the hydrophilicity is. The HLB values of various emulsifiers are different. In order to obtain stable emulsions, suitable emulsifiers must be selected.

In the present invention, the emulsifier is at least one selected from the group consisting of castor oil polyoxyethylene ether, calcium dodecylbenzene sulfonate, fatty alcohol polyoxyethylene ether, fatty acid polyoxyethylene ester, alkylphenol formaldehyde resin polyoxyethylene ether, sorbitan monostearate, dehydrated sorbitol monostearate polyoxyethylene ether, phenylethylphenol polyoxyethylene ether, phenethyl phenol polyoxyethylene polypropylene ether, alkoxy polyoxyethylene ether sulfonate, fatty alcohol sulfate, alkyl phosphate salt, fatty alcohol polyoxyethylene ether sulfate, EO-PO block copolymer and phenylethylphenol polyoxyethylene ether sulfonate.

In a preferred embodiment, the described emulsifier is a combination of castor oil polyoxyethylene ether and phenylethylphenol polyoxyethylene ether sulfonate with a weight ratio of 1: (0.1-0.5).

In a more preferred embodiment, the weight ratio of the castor oil polyoxyethylene ether and phenylethylphenol polyoxyethylene ether sulfonate is 1: (0.1-0.5).

Castor oil polyoxyethylene ether

In the present invention, the HLB value of the castor oil polyoxyethylene ether is 9-14.

In a preferred embodiment, the HLB value value of the castor oil polyoxyethylene ether is 11-13.

In a preferred embodiment, the saponification value of the castor oil polyoxyethylene ether is 30-100mgKOH/g.

In a more preferred embodiment, the saponification value of the castor oil polyoxyethylene ether is 50-70mg KOH/g.

In the present invention, there is no special restriction on the source of the castor oil polyoxyethylene ether, and the Jiangsu Haian Petrochemical Plant can be mentioned and the specifications include EL20, HEL20, EL30, HEL30, EL40, HEL40 and the like.

Phenethyl phenol polyoxyethylene ether sulfonate

In the present invention, there is no special restriction on the source of phenylethylphenol polyoxyethylene ether sulfonate, and Shandong Tiandao Biological Engineering Co., Ltd. can be mentioned. The type is 602#.

The inventors find that the compound of castor oil polyoxyethylene ether and phenylethylphenol polyoxyethylene ether sulfonate can effectively prevent flocculation of raw drug particles, thus improving the suspension stability and storage stability of dispersible oil suspensions. The inventors believe that it is possibly because the combination of castor oil polyoxyethylene ether and phenylethylphenol polyoxyethylene ether sulfonate can significantly reduce the surface free energy of raw drug ions. On the one hand, the castor oil polyoxyethylene ether can adsorb particles and form a thick adsorption layer. On the other hand, the phenylethylphenol polyoxyethylene ether sulfonate can form a diffusion double layer on the surface of the particles, which not only makes the ions of the original drug repulsive, but also can further improve the stability of the system by increasing the steric hindrance of inter-particle aggregation. In particular, when the weight ratio of the castor oil polyoxyethylene ether and phenylethylphenol polyoxyethylene ether sulfonate is 1: (0.1-0.5), the suspension stability of the prepared dispersible oil suspension agent is the best, and no particles will precipitate even if it is stored for a long time. In the course of the research, the inventors also accidentally find that the dispersion performance of the dispersible oil suspension after dissolving in water can be improved by compounding of emulsifier. The inventors believe that it is possibly because the emulsion has a large number of interfaces, which is a thermodynamically unstable system, and has the trend of automatic coalescence, delamination and sedimentation in order to reduce the interface. While the emulsifier used in this system can produce synergistic effect, effectively reduce the interfacial tension between oil and water, so that the original drug particles should also have the ability to maintain dispersion in water, which is conducive to emulsification and improve the stability of the emulsion.

Wetting agent

The wetting agent is also known as humectant, is one of pesticide auxiliaries, and is a substance that can soak a solid pesticide insoluble in or moist by water. It mainly reduces the surface tension or interfacial tension of water, so that the solid surface can be wetted by water. The pesticide insoluble in water can be mixed with water and used as suspension, and the liquid can be wetted and spread on the surface of crops, insects and bacteria, so as to improve the control effect and reduce the occurrence of drug damage.

In the present invention, the wetting agent has no special limitation and is well known to the technicians in the present field.

In a preferred embodiment, the wetting agent is selected from at least one of alkylphenol polyoxyethylene ether formaldehyde condensate sulfate, alkylphenol polyoxyethylene ether phosphate, phenylethylphenol polyoxyethylene ether phosphate, alkyl phenol polyoxyethylene ether phosphate, alkyl sulfate, alkyl sulfonate and naphthalene sulfonate in order to further improve the ability of original drug particles to be dispersed into fine individual particles in water and also improve the dispersion ability of original drug particles in water.

In the present invention, the weight ratio of the emulsifier and the wetting agent is 1: (0.05-0.5).

In a preferred embodiment, the weight ratio of the emulsifier to the wetting agent is 1: 0.2.

Dispersing agent

The dispersant is a kind of interfacial active agent which has both lipophilic and hydrophilic properties.

In the present invention, the dispersant is selected from at least one of polycarboxylates, lignosulfonates, EO-PO block copolymers, phosphates and their salts, sulfonates, alkyl naphthalene sulfonates, alkylphenol polyoxyethylene ethers and fatty alcohol polyoxyethylene ethers.

In a preferred embodiment, the dispersant is a combination of sulfonates and phosphate esters with a weight ratio of 1: (0.1-1.5).

In a more preferred embodiment, the weight ratio of the sulfonates to phosphates is 1: 0.85.

Sulfonates

In the present invention, the sulfonates are selected from at least one of naphthalenesulfonic acid formaldehyde condensates, alkyl naphthalene sulfonate formaldehyde condensates, lignin acid sulfonates and aminosulfonates.

In a preferred embodiment, the preferred molecular structure of the described sulfonates includes compounds aryl groups, preferred naphthalenesulfonic acid formaldehyde condensates and alkyl naphthalene sulfonic acid formaldehyde condensates.

In the present invention, there is no special restriction on the source of the naphthalenesulfonic acid formaldehyde condensate and the alkyl naphthalenesulfonic acid formaldehyde condensate, and Jinan Hongboli Chemical Co., Ltd can be mentioned.

Phosphate esters

In the present invention, the preferred molecular structure of the described phosphate esters includes the compounds with amino and amide groups.

In a preferred embodiment, the described phosphate esters may refer to alkylamide polyoxyethylene ether phosphate esters.

In the present invention, there is no special restriction on the source of alkylamide polyoxyethylene ether phosphate, and Guangzhou Bifeng Trading Co., Ltd can be mentioned.

In the present invention, the weight ratio of the emulsifier to the dispersant is 1: (0.1-0.5).

In a preferred embodiment, the weight ratio of the emulsifier to the dispersant is 1: 0.4.

The inventors find that the sulfonate dispersant with aryl group in the structure and the phosphate surfactant with amino or amide group in the structure can effectively improve the stability of the dispersible oil suspension after high/low temperature storage. The inventors believe that it is possibly because the surface of the original drug particles is a relatively hydrophobic structure, especially benzylazole has a lower melting point and is easier to accumulate. The dispersant molecule adopted in the invention can cooperate with the pesticide surface through Van der Waals gravity, hydrogen bond force, electrostatic repulsion force and steric hindrance force, so that the original drug particles are not affected by temperature and are better dispersed. However, when the dosage of the dispersant is less than 1%, the dispersant does not reach saturated adsorption status on the surface of the original drug particles, the pesticide particles cannot be fully coated by dispersant molecules, and the particles agglomerate and settle under the action of Van der Waals force and gravity field, which increases the viscosity of the preparation. When the amount of dispersant is more than 10%, the excess dispersant molecules in the system are entangled with the coating layer on the surface of the effective component particles, resulting in bridging between the particles, flocculation, increased viscosity and poor fluidity of the preparation and then affecting the appearance of the preparation.

Viscosity regulator

The viscosity regulator is mainly to regulate the viscosity and consistency of products and generally there are two kinds of viscosity reducer and tackifier.

In the present invention, there is no special restriction on the viscosity regulator and it is well known to technicians in the present field.

In a preferred embodiment, in order to further improve the suspension stability of the system and inhibit the sedimentation of the original drug particles, it is necessary not only to maintain the fluidity of the system, but also to ensure that the system is not delaminated and does not have the phenomenon of austenitic ripening during thermal storage. The viscosity regulator can refer to Arabic gum, xanthan gum, polyvinylpyrrolidone, organic bentonite, hydroxymethyl cellulose, polyvinyl alcohol, silicon dioxide, magnesium aluminum silicate, etc.

In a more preferred embodiment, the viscosity regulator is a combination of organic bentonite and magnesium aluminum silicate with a weight ratio of 1: (0.5-2).

In one most preferred embodiments, the weight ratio of the organobentonite to magnesium aluminum silicate is 1: 0.76.

The inventors believe that the system can absorb water and expand in water to form a hydrogel net structure through the combination of organic bentonite and aluminum magnesium silicate. At the same time, the polymer chain can be expanded to form a two-dimensional structure by covalent bond and hydrogen bond or ion repulsion, so as to make the system thixotropic and increase the structural strength of the suspension system.

Base oil

In the present invention, there is no special restriction on the base oil and it is well known to technicians in the present field. Vegetable oils, vegetable oil ester compounds, mineral oils and the like can be mentioned.

In a preferred embodiment, the base oil is selected from at least one of soybean oil, corn oil, rapeseed oil, cottonseed oil, castor oil, turpentine, palm oil, coconut oil, sunflower oil, methyl oleate, diesel oil, engine oil and mineral oil.

In a more preferred embodiment, the base oil includes at least methyl oleate.

In a more preferred embodiment, the base oil is a combination of castor oil and methyl oleate with a weight ratio of 1: (0.1-10).

The inventors find that on the one hand, the compounding of castor oil and methyl oleate can improve the dispersion stability of emulsifier and dispersant in base oil and further improve the suspension and stability of the system and its dispersion in water. On the other hand, it can reduce the oil evolution rate of the system at room temperature and thermal storage state, and further increase the suspension rate. The inventors believe that it is possibly because the organic bentonite and aluminum magnesium silicate can absorb oil and expand in methyl oleate to form a net gel structure, which wraps a large number of oily medium molecules in the net void. As more organic carbon chains of organic bentonite overlap and cover each other, it increases the ability of the structure to resist damage and the yield value of the system, decreases the oil evolution rate of the system, and increases the suspension rate.

In the present invention, the preparation method of the described dispersible oil suspension agent is as follows: the herbicidal composition, emulsifier, wetting agent, dispersant, defoamer, viscosity regulator and base oil are mixed and dispersed at high speed for 10-60 minutes; and then are ground to D97 of 1-10 $\mu$ m.

In a more preferred embodiment, the D97 is 3 $\pm$1 $\mu$ m.

D97 refers to the particle diameter value in the particle size distribution when the cumulative distribution percentage reaches 97% from small to large. That is, in a certain powder, the number of particles with a particle size less than D97 accounts for 97% of the total number of particles. It is usually used to represent the coarse-end particle size index of powder, and it is an index that has been paid more attention in the production and application of powder.

The inventors find that the D97 of the control system is 1-10 $\mu$ m, which can significantly improve the dispersion and storage stability of the system.

The present invention provides the application of the herbicidal composition for the control of weeds in non-cultivated land in the third aspect.

In a preferred embodiment, the non-cultivated land may refer to woodland, lawns, highways, railways, warehouses, ridges, ditches, forest fireproof roads, etc.

The present invention is described in detail through an embodiment below. It is necessary to point out here that the following embodiments are only used for further explanation of the invention and cannot be understood as a restrictions on the scope of protection of the invention. Some non-essential improvements and adjustments made by professionals and technicians in the field according to the contents of the invention still fall within the scope of protection of the invention.

**Examples**

Example 1

The Example 1 provides a herbicide dispersible oil suspension which includes at least the following components in weight percentage: 30% herbicide composition, 10% emulsifier, 2% wetting agent, 4% dispersant, 6 % viscosity regulator and 100 % base oil replenishment; The described herbicide combination is a combination of benzylazole and glyphosate with a weight ratio of 1:40. The described emulsifier is a combination of castor oil polyoxyethylene ether and phenylethylphenol polyoxyethylene ether sulfonate with a weight ratio of 1:0.35. The described castor oil polyoxyethylene ether is purchased from Jiangsu Haian Petrochemical Plant, and the type is EL30. The described phenylethylphenol polyoxyethylene ether sulfonate is purchased from Shandong Tiandao Biological Engineering Co., Ltd. and the type is 602#. The described wetting agent is alkylphenol polyoxyethylene ether formaldehyde condensate sulfate, purchased from Jiangsu Haian Petrochemical Plant. The described dispersant is a combination of alkylnaphthalene sulfonic acid formaldehyde condensate and alkylamide polyoxyethylene ether phosphate with a weight ratio of 1: 0.85. The described alkylnaphthalene sulfonic acid formaldehyde condensate is purchased from Jinan Hongboli Chemical Co., Ltd. The described alkyl amide polyoxyethylene ether phosphate ester is purchased from Guangzhou Bifeng Trading Co., Ltd. The described viscosity regulator is a combination of organic bentonite and magnesium aluminum silicate with a weight ratio of 1: 0.76. The described organic bentonite is purchased from Tuoyi New Material (Guangzhou) Co., Ltd. The described base oil is a combination of castor oil and methyl oleate with the weight ratio of 1: 0.8.

The described preparation method of the dispersible oil suspension agent is as follows: The herbicidal composition, emulsifier, wetting agent, dispersant, defoamer, viscosity regulator and base oil are mixed and dispersed at high speed for 30 minutes; and then are ground to 5 $\mu$ m D97.

Example 2

The Example 2 provides a herbicide dispersible oil suspension which includes at least the following components in weight percentage: 30% herbicide composition, 5% emulsifier, 1% dispersant, 2% viscosity regulator and 100% base oil supplement. The described herbicide combination is a combination of benzylazole and glyphosate with a weight ratio of 1:40. The described emulsifier is a combination of castor oil polyoxyethylene ether and phenylethylphenol polyoxyethylene ether sulfonate with a weight ratio of 1: 0.1. The described castor oil polyoxyethylene ether is purchased from Jiangsu Haian Petrochemical Plant, and the type is EL30. The described phenylethylphenol polyoxyethylene ether sulfonate is purchased from Shandong Tiandao Biological Engineering Co., Ltd., and the type is 602#. The described wetting agent is alkylphenol polyoxyethylene ether formaldehyde condensate sulfate and is purchased from Jiangsu Haian Petrochemical Plant. The described dispersant is a combination of alkylnaphthalene sulfonic acid formaldehyde condensate and alkylamide polyoxyethylene ether phosphate with a weight ratio of 1: 0.1. The described alkylnaphthalene sulfonic acid formaldehyde condensate is purchased from Jinan Hongboli Chemical Co., Ltd. The described alkyl amide polyoxyethylene ether phosphate ester is purchased from Guangzhou Bifeng Trading Co., Ltd. The described viscosity regulator is a combination of organic bentonite and magnesium aluminum silicate with a weight ratio of 1:.0.5. The described organic bentonite is purchased from Tuoyi New Material (Guangzhou) Co., Ltd. The described base oil is a combination of castor oil and methyl oleate with a weight ratio of 1:.0.1.

The preparation method of the dispersible oil suspension agent is as follows: The herbicidal composition, emulsifier, wetting agent, dispersant, defoamer, viscosity regulator and base oil are mixed, next cut and dispersed for 30 minutes; and then are ground to D97 of 5 $\mu$ m.

Example 3

The Example 3 provides a herbicide dispersible oil suspension which includes at least the following components in percentage by weight: 50% herbicide composition, 20% emulsifier, 5% wetting agent, 5% dispersant, 10% viscosity regulator and 100% base oil supplement. The described herbicide combination is a combination of benzylazole and glyphosate with a weight ratio of 1:40. The described emulsifier is a combination of castor oil polyoxyethylene ether and phenylethylphenol polyoxyethylene ether sulfonate with a weight ratio of 1:0.5. The described castor oil polyoxyethylene ether is purchased from Jiangsu Haian Petrochemical Plant and the type is EL30. The described phenylethylphenol polyoxyethylene ether sulfonate is purchased from Shandong Tiandao Biological Engineering Co., Ltd. and the type is 602#. The described wetting agent is alkylphenol polyoxyethylene ether formaldehyde condensate sulfate and is purchased from Jiangsu Haian Petrochemical Plant. The described dispersant is a combination of alkylnaphthalene sulfonic acid formaldehyde condensate and alkylamide polyoxyethylene ether phosphate with a weight ratio of 1: 1.5. The described alkylnaphthalene sulfonic acid formaldehyde condensate is purchased from Jinan Hongboli Chemical Co., Ltd. The described alkyl amide polyoxyethylene ether phosphate ester is purchased from Guangzhou Bifeng Trading Co., Ltd. The described viscosity regulator is a combination of organic bentonite and magnesium aluminum silicate with a weight ratio of 1:2, The described organic bentonite is purchased from Tuoyi New material (Guangzhou) Co., Ltd. The described base oil is a combination of castor oil and methyl oleate with a weight ratio of 1:10.

The preparation method of the dispersible oil suspension agent is as follows: the herbicidal composition, emulsifier, wetting agent, dispersant, defoamer, viscosity regulator and base oil are mixed and dispersed at high speed for 30 minutes; and then are ground to D97 of 1-10 $\mu$ m.

Example 4

The difference between Example 4 and Example 1 is that the emulsifier does not include castor oil polyoxyethylene ether.

Example 5

The difference between the Example 5 and Example 1 is that the emulsifier does not include phenylethyl phenol polyoxyethylene ether sulfonate.

Example 6

The difference between the Example 6 and Example 1 is that the phenylethylphenol polyoxyethylene ether sulfonate is replaced by alkylphenol polyoxyethylene ether in the emulsifier.

Example 7

The difference between the Example 7 and Example 1 is that the dispersant does not include alkyl naphthalenesulfonic acid formaldehyde condensates.

Example 8

The difference between the Example 8 and Example 1 is that the dispersant does not include alkylamide polyoxyethylene ether phosphate.

Example 9

The difference between the Example 9 and Example 1 is that the alkyl naphthalenesulfonic acid formaldehyde condensate in the dispersant is replaced with sodium lignosulfonate.

Example 10

The difference between the Example 10 and Example 1 in that alkylamide polyoxyethylene ether phosphate is replaced by alkylphenol polyoxyethylene ether phosphate in the dispersant.

Example 11

The difference between the Example 11 and Example 1 is that the viscosity regulator does not include aluminum magnesium silicate.

Example 12

The difference between the Example 12 and Example 1 is that the base oil does not include methyl oleate.

Example 13

The difference between Example 13 and Example 1 is that the herbicide combination is a combination of benzylazole and glyphosate with a weight ratio of 1:30.

**Performance Testing**

1.Thermal storage stability:

Suck about 10 g oil suspending agent samples by a pipette, inject it into clean ampere bottles, then seal it at high temperature and put it into a constant temperature ($54 \pm 2$ °C) thermostat. After thermal storage for 14 days, the suspension rate and viscosity of dispersible oil suspensions are tested respectively. If all the indexes before and after thermal storage satisfy the national standards, then the thermal storage is qualified and the samples are stored at room temperature for 2 years. Qualified samples are marked by " V " and unqualified samples are marked by "×".

2. Cold storage stability:

Suck about 80mL oil suspension agent into a 100mL beaker by a pipette, refrigerate it in a refrigerator ($0 \pm 2$ °C) for one hour, stir every 15 minutes, stir it for 15s every time, observe the change of appearance, then keep the beaker in refrigerator for 7 days, take out after 7 days, and place at room temperature to test the suspension rate and viscosity of oil suspension agent, If all the indexes before and after cold storage satisfy the national standard, the cold storage is qualified, and the sample stored at room temperature for 2 years is qualified. Qualified samples are marked by " √ " and unqualified samples are marked by "×".

3.Viscosity: At room temperature, the viscosity of dispersible oil suspension is measured by NDJ-1 rotary viscometer, the viscosity of each sample is measured three times and the average value is taken.

4. Suspension rate: It is tested by reference to HG/T 2467.5-2003.

The test results are shown in Table 1.

Table 1. Performance test results of Example

| Examples | 1 | 2 | 3 | 4 | 5 | 6 | 7 | 8 | 9 | 10 | 11 | 12 | 13 |
|---|---|---|---|---|---|---|---|---|---|---|---|---|---|
| Thermal storage stability | √ | √ | √ | × | × | × | × | × | × | × | × | × | √ |
| Cold storage stability | √ | √ | √ | × | × | × | × | × | × | × | × | × | √ |
| Viscosity (map·s) | 245 | 308 | 455 | 300 | 321 | 298 | 344 | 312 | 296 | 305 | 362 | 259 | 315 |
| Suspension rate (%) | 98 | 99 | 96 | 90 | 93 | 91 | 95 | 92 | 96 | 99 | 97 | 98 | 98 |

5. Control effect test:

Samples under test:
Benzylazole and glyphosate
Target under test:

*Conyzacanadensis (L.) Cronq.* with glyphosate resistance is collected from Baihe Mountain, Changde City, Hunan Province;
*Eleusineindica (L.). Gaertn.* with glyphosate resistance is collected from Maan Town, Huizhou City, Guangdong Province.

Test method:

Indoor cultivation of target test materials

The seeds of *conyzacanadensis(L.) cronq.* and *eleusineindica(L.) gaertn.* are sown in the seedling tray, and the seedlings are transplanted after it is about 10cm, 1 seedling is put per paper cup and is cultured normally in the greenhouse, and the stems and leaves are sprayed about 15 days after transplanting.

Treatment method:

According to the designed dosage of the experiment, it is sprayed on the crawler crop sprayer (It is designed and produced by England Engineer Research Ltd) (the spray pressure is 1.95kg/cm2, the spray volume is 500L/hm2 and the track speed is 1.48km/h) and the experiment is repeated for 3 times. After the test material was treated, it was placed at the operation hall. After the solution is naturally air-dried, it is managed at the greenhouse according to the conventional method, the response of the tested weeds to the pesticide is observed and recorded, and the weed control effect of the tested agent is investigated regularly or fresh weight after treatment.
Statistical analysis method of test results:

Calculation of $ED_{50}/ED_{90}$ value of tested medicament
DPS statistical analysis software is used for calculation
Calculation of co-toxicity coefficient:

$$\text{Co-toxicity coefficient} = \frac{1/\ ED_{50}/ED_{90} \text{ value of agent}}{P_A/ED50(90) \text{ value of agent A} + P_B/\ B \text{ value of agent}} \times 100$$

Wherein PA is the proportion of medicament A in the effective components of the mixture and PB is the proportion of medicament B in the effective components of the mixture. If the co-toxicity coefficient is less than 80, it is antagonism; if the co-toxicity coefficient is more than 120, it is synergism, and the co-toxicity coefficient between 80 and 120 is additive.
The results are shown in tables 2 and 3, in which A is benzylazole and B is glyphosate.

Table 2 Results of the control effect of the mixture of benzylazole and glyphosate on glyphosate-resistant *conyzacanadensis(L.) cronq.*

| Medicament under test | ED$_{50}$ value (g a.i./hm$^2$) | A | B | A+B | PA | PB | Co-toxicity coefficient | Mixed results |
|---|---|---|---|---|---|---|---|---|
| A:B=1:50 | 886.5 | 1 | 100 | 101 | 0.0099 | 0.9901 | 81 | + |
| A:B=1:45 | 758.2 | 1 | 90 | 91 | 0.0110 | 0.9890 | 88 | + |
| A:B=1:40 | 620.8 | 1 | 80 | 81 | 0.0123 | 0.9877 | 99 | + |
| A:B=1:35 | 546.6 | 1 | 70 | 71 | 0.0141 | 0.9859 | 102 | + |
| A:B=1:30 | 448.9 | 1 | 60 | 61 | 0.0164 | 0.9836 | 110 | + |
| A:B=1:25 | 370.8 | 1 | 50 | 51 | 0.0196 | 0.9804 | 115 | + |
| A:B=1:20 | 251.5 | 1 | 40 | 41 | 0.0244 | 0.9756 | 141 | ++ |
| A:B=1:15 | 178.8 | 1 | 30 | 31 | 0.0323 | 0.9677 | 155 | ++ |
| A:B=1:10 | 156.3 | 1 | 20 | 21 | 0.0476 | 0.9524 | 124 | ++ |
| A:B=1:5 | 120.5 | 1 | 10 | 11 | 0.0909 | 0.9091 | 88 | + |

Table 3 Results of the control effect of the mixture of benzylazole and glyphosate on glyphosate-resistant *eleusineindica(L.) gaertn.*

| Medicament under test | ED$_{50}$ value (ga.i./hm$^2$) | A | B | A+B | PA | PB | Co-toxicity coefficient | Mixed results |
|---|---|---|---|---|---|---|---|---|
| A:B=1:50 | 1136.5 | 1 | 100 | 101 | 0.0099 | 0.9901 | 102 | + |
| A:B=1:45 | 1101.9 | 1 | 90 | 91 | 0.0110 | 0.9890 | 99 | + |
| A:B=1:40 | 1066.7 | 1 | 80 | 81 | 0.0123 | 0.9877 | 96 | + |
| A:B=1:35 | 800.0 | 1 | 70 | 71 | 0.0141 | 0.9859 | 118 | + |
| A:B=1:30 | 653.1 | 1 | 60 | 61 | 0.0164 | 0.9836 | 132 | ++ |
| A:B=1:25 | 580.9 | 1 | 50 | 51 | 0.0196 | 0.9804 | 131 | ++ |
| A:B=1:20 | 466.4 | 1 | 40 | 41 | 0.0244 | 0.9756 | 140 | ++ |
| A:B=1:15 | 378.4 | 1 | 30 | 31 | 0.0323 | 0.9677 | 139 | ++ |
| A:B=1:10 | 350.0 | 1 | 20 | 21 | 0.0476 | 0.9524 | 109 | + |
| A:B=1:5 | 212.1 | 1 | 10 | 11 | 0.0909 | 0.9091 | 102 | + |

6. Field efficacy trial:

Medicament under test:

The herbicide of Example 13 can disperse the oil suspension control medicament:
10% benzylazole water emulsion (Nantong Jiangshan Pesticide Chemical Co., Ltd.) and 30% glyphosate soluble solution (trade name: Nongda).

Test site:

The Yangtze River dam in Chizhou

Objects to prevent and remove:

The dominant weeds are *eleusineindica(L.) gaertn.* and *conyzacanadensis(L.)* cronq., which grow vigorously and densely with an average plant height of 10-30 cm; There are other weeds such as Suaeda salsa, water celery, horse tang, dog tooth root, litchi grass, motherwort, snake bed and so on.

Test method:

Cell division: each process is repeated 3 times and randomly arranged. 20 m² is for each cell.

Usage: spray the stems and leaves on May 23, 2020 with 3WBD-20L electric sprayer, the sprinkler is fan-shaped sprayer, the working pressure is 0.2-0.4Mpa, the amount of spray is 45kg/ mu, and the spray is uniform.

(The conventional control of weeds on the dam needs to be carried out for 2-3 times, and glyphosate is mainly sprayed with dimethyltetrachloride and trimethoprim. The *conyzacanadensis(L.) cronq.* has stronger resistance)

Methods of investigation, recording and measurement:

Meteorological data: The medicament is sprayed on a sunny day with the average temperature of 20.4 °C, the highest temperature of 25.3 °C and breeze. During the experiment, there are more rainy days, but there is no obvious adverse environment.

Investigation of weeds: the symptoms and speed of weed death are observed visually on 3 days, 6 days, 9 days, 12 days and 16 days after treatment, and samples are taken at 3 o'clock at each cell on 16 days after treatment, the residual number of 00.25 m² *conyzacanadensis(L.) cronq..* is investigated per site, and the control effect is calculated. The control effect on weeds of *conyzacanadensis(L.) cronq.* weeds (16 days after treatment) was as follows:

| Treatment | Repetition | Dosage of preparation (mL/Mu) | Dosage of active ingredient (g / ha) | Control effect for each% |
|---|---|---|---|---|
| 10% benzylazole water emulsion | 1 | 60 | 90 | 91.0 |
| | 2 | 60 | 90 | 90.3 |
| | 3 | 60 | 90 | 90.8 |
| 30% glyphosate soluble solution (Nongda) | 1 | 300 | 1350 | 57.0 |
| | 2 | 300 | 1350 | 60.1 |
| | 3 | 300 | 1350 | 59.4 |
| Dispersible oil suspension of Example 13 herbicide | 1 | 200 | 930 | 95.0 |
| | 2 | 200 | 930 | 95.4 |
| | 3 | 200 | 930 | 96.2 |

The aforementioned embodiments are illustrative only and are used to explain some of the characteristics of the method of the present invention. The accompanying claims are intended to require the widest possible scope that can be conceived and the embodiments presented herein are only illustrations of embodiments selected according to a combination of all possible embodiments. Therefore it is the intention of the applicant that the attached claim is not limited by the selection of embodiments illustrating the characteristics of the present invention. Some of the numerical ranges used in the claims also include sub-ranges within them, and changes in these ranges should, where possible, be interpreted as being covered by the attached claims.

**Claims**

1. A herbicidal composition, wherein the composition comprises benzylazole and glyphosate; and the weight ratio of benzylazole to glyphosate is 1: (10-100).

2. A herbicidal composition preparation, comprising the herbicidal composition of claim 1 and an agropharmaceutical acceptable excipient.

3. The herbicidal composition preparation of claim 2, wherein the herbicidal composition preparation has a dosage form selected from the group consisting of a soluble agent, a microemulsion, a dispersible oil suspension, a wettable powder and a water dispersible granule.

4. The herbicidal composition preparation of claim 2, wherein the weight percentage of the herbicidal composition to the herbicidal composition preparation is 5%-90%.

5. The herbicidal composition preparation of claim 2, wherein the herbicidal composition preparation is a dispersible oil suspension agent; and the agropharmaceutical acceptable excipients include at least one selected from the group consisting of an emulsifier, a wetting agent, a dispersant, a stabilizer, a defoamer, a viscosity regulator and a base oil.

6. The herbicidal composition preparation of claim 5, wherein the emulsifier is at least one selected from the group consisting of castor oil polyoxyethylene ether, calcium dodecylbenzene sulfonate, fatty alcohol polyoxyethylene ether, fatty acid polyoxyethylene ester, alkylphenol formaldehyde resin polyoxyethylene ether, sorbitan monostearate, dehydrated sorbitol monostearate polyoxyethylene ether, phenylethylphenol polyoxyethylene ether, phenethyl phenol polyoxyethylene polyoxypropylene ether, alkoxy polyoxyethylene ether sulfonate, fatty alcohol sulfate, alkyl phosphate salt, fatty alcohol polyoxyethylene ether sulfate, EO-PO block copolymer and phenylethylphenol polyoxyethylene ether sulfonate.

7. The herbicidal composition preparation of claim 6, wherein the emulsifier is a combination of castor oil polyoxyethylene ether and phenylethylphenol polyoxyethylene ether sulfonate with a weight ratio of 1: (0.1-0.5).

8. The herbicidal composition preparation of claim 5, wherein the dispersant is at least one selected from the group consisting of polycarboxylates, lignosulfonates, EO-PO block copolymers, phosphates and their salts, sulfonates, alkyl naphthalene sulfonates, alkylphenol polyoxyethylene ethers and fatty alcohol polyoxyethylene ethers.

9. The herbicidal composition preparation of claim 5, wherein the viscosity regulator is a combination of organic bentonite and magnesium aluminum silicate with a weight ratio of 1: (0.5-2).

10. Application of the herbicidal composition of claim 1, wherein it is used to control weeds that are not cultivated.

## INTERNATIONAL SEARCH REPORT

| | International application No. |
|---|---|
| | **PCT/CN2022/075774** |

**A. CLASSIFICATION OF SUBJECT MATTER**

A01N 57/20(2006.01)i;  A01N 43/80(2006.01)i;  A01N 25/04(2006.01)i;  A01P 13/00(2006.01)i

According to International Patent Classification (IPC) or to both national classification and IPC

**B. FIELDS SEARCHED**

Minimum documentation searched (classification system followed by classification symbols)

A01N; A01P

Documentation searched other than minimum documentation to the extent that such documents are included in the fields searched

Electronic data base consulted during the international search (name of data base and, where practicable, search terms used)

CNTXT, ENTXT, VEN: 苯嘧磺草胺, 苯嘧草唑, SY-1604, 可分散油悬浮剂, 草甘膦, 沈阳中化, CN2021103042612语义检索, OD, oil based suspension concentration, glyphosate

**C. DOCUMENTS CONSIDERED TO BE RELEVANT**

| Category* | Citation of document, with indication, where appropriate, of the relevant passages | Relevant to claim No. |
|---|---|---|
| PX | CN 113412840 A (NANTONG JIANGSHAN AGROCHEMICAL & CHEMICALS LTD. LIABILITY CO.) 21 September 2021 (2021-09-21) <br> claims 1-10 | 1-10 |
| PX | CN 113491269 A (SINOCHEM CORP.) 12 October 2021 (2021-10-12) <br> claims 1-10, embodiments 1-3, and description paragraphs 0040, 0043, 0117 | 1-6, 8 |
| X | CN 108207997 A (SINOCHEM CORP.) 29 June 2018 (2018-06-29) <br> description, paragraphs 0099-0106, 0033, 0056-0057, 0074-0076 | 1-4, 10 |
| Y | CN 108207997 A (SINOCHEM CORP.) 29 June 2018 (2018-06-29) <br> description, paragraphs 0099-0106, 0033, 0056-0057, 0074-0076 | 5-9 |
| Y | CN 110786323 A (HUIZHOU YINNONG TECHNOLOGY CO., LTD.) 14 February 2020 (2020-02-14) <br> claims 1-3 and 5 | 5-9 |
| Y | CN 110692643 A (SINOCHEM CORP.) 17 January 2020 (2020-01-17) <br> claims 1, 6, and embodiments 3, 4 | 5-9 |
| A | CN 107318884 A (SHAANXI SUNGER ROAD BIO-SCIENCE CO., LTD.) 07 November 2017 (2017-11-07) <br> entire document | 1-10 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 March 2022** | **30 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/075774** |

**C.    DOCUMENTS CONSIDERED TO BE RELEVANT**

| Category* | Citation of document, with indication, where appropriate, of the relevant passages | Relevant to claim No. |
| --- | --- | --- |
| A | 杨吉春等 (YANG, Jichun et al.). "灭生性除草剂SY-1604的创制 (Non-official translation: Creation of Biocidal Herbicide SY-1604)" <br> *中国化工学会农药专业委员会第十八届年会论文集 (Non-official translation: Proceedings of the 18th Annual Meeting of Pesticides Specialized Committee of the Chemical Industry and Engineering Society of China)*, 15 August 2018 (2018-08-15), <br> pp. 113-118 | 1-10 |

Form PCT/ISA/210 (second sheet) (January 2015)

**INTERNATIONAL SEARCH REPORT**
Information on patent family members

International application No.

**PCT/CN2022/075774**

| Patent document cited in search report | | | Publication date (day/month/year) | Patent family member(s) | Publication date (day/month/year) |
|---|---|---|---|---|---|
| CN | 113412840 | A | 21 September 2021 | None | |
| CN | 113491269 | A | 12 October 2021 | None | |
| CN | 108207997 | A | 29 June 2018 | None | |
| CN | 110786323 | A | 14 February 2020 | None | |
| CN | 110692643 | A | 17 January 2020 | None | |
| CN | 107318884 | A | 07 November 2017 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022075774 W
- CN 202110304261